# EUROPÄISCHE PATENTSCHRIFT

(11) **EP 0 396 566 B1**
(45) Veröffentlichungstag und Bekanntmachung des Hinweises auf die Patenterteilung: **16.06.1993**
(21) Anmeldenummer: 88910031.9
(22) Anmeldetag: 19.11.1988
(51) Int. Cl.: G01F 1/58

(54) **MESSWERTAUFNEHMER FÜR EIN MAGNETISCH-INDUKTIVES DURCHFLUSSMESSGERÄT**
TRANSDUCER FOR AN ELECTROMAGNETIC FLOW METER
TRANSDUCTEUR POUR DEBITMETRE MAGNETO-INDUCTIF

(43) Veröffentlichungstag der Anmeldung: 14.11.1990
(73) Patentinhaber: Krohne AG, 4019 Basel (CH)
(72) Erfinder: VAN DER POL, Ronald, NL-5924 AK Venlo (NL)
(74) Vertreter: Ackmann, Günther
(86) Internationale Anmeldenummer: EP8801060
(87) Internationale Veröffentlichungsnummer: WO9005894

(56) Entgegenhaltungen:
- EP-A- 0 047 342
- EP-A- 0 179 285
- DE-A- 1 573 066
- US-A- 4 181 018
- US-A- 4 774 844

## Beschreibung

Die Erfindung betrifft einen Meßwertaufnehmer für ein magnetisch-induktives Durchflußmeßgerät mit einem dickwandigen Meßrohr aus einem elektrisch isolierenden Werkstoff, wobei an dem mit zwei Meßelektroden versehenen, vorgefertigten Meßrohr eine aus Magnetpolen, Joch und Magnetspulen bestehende Magneteinrichtung angebracht ist.

Zur Herstellung des Meßwertaufnehmers für ein magnetischinduktives Durchflußmeßgerät sind im wesentlichen zwei Methoden bekannt. Nach der einen Methode wird ein aus einem elektrisch isolierenden Werkstoff bestehendes Meßrohr vorgefertigt, und in einem weiteren Arbeitsgang wird eine Magneteinrichtung und Gehäuse mit dem Meßrohr verbunden. Nach der zweiten Methode wird die Magneteinrichtung mittels einer Form vollständig in eine Kuststoffmasse eingebettet, wobei die Kunststoffmasse den Druckkörper bildet und die Durchflußpassage für das Maßmedium entweder durch ein von der Kunststoffmasse umgebenes dünnwandiges Rohrstück gebildet oder unmittelbar beim Vergießen der Kunststoffmasse eingeformt wird.

Bei einem magnetisch-induktiven Durchflußmeßgerät der ersten Art, wie es beispielsweise aus der DE-A 15 73 066 bekannt ist, liegt das die Magnetpole verbindende Joch außerhalb der zylindrischen Außenfläche des Meßrohres. Abgesehen von dem großen Platzbedarf für das Joch, verursacht diese Bauart bei Geräten mit kleiner Nennweite große Verluste des magnetischen Flusses und eine Verringerung der Meßempfindlichkeit. Aus der EP-A 0179285 ist weiterhin eine Ausführung bekannt, bei der das Meßrohr aus zwei vorgefertigten Durchflußsensoren besteht, die in einem Gehäuse mit sich kreuzenden Bohrungen angeordnet sind und an ihrem Kopfende rinnenförmige Ausnehmungen haben, welche im eingebauten Zustand die Durchflußpassage bilden. In einem tassenförmigen Hohlraum der Durchflußsensoren ist jeweils ein mit Magnetspulen versehenes Joch angeordnet, dessen Magnetpole in seitlich neben der Durchflußpassage vorhandenen Taschen einliegen. Für ein einteiliges dickwandiges Meßrohr, das auch unter hohem Druck stehenden Medien standhält, ist eine solche zweiteilige und außerdem platzraubende Ausführung nicht geeignet.

Ein nach der zweiten Methode herstellter Meßwertaufnehmer ist beispielsweise in der US-A 4181018 beschrieben, wonach als Bauteile eine dünnwandige Kunststoffspule mit eingeformten Elektroden und eine aus zwei Magnetspulen und einem Joch in Form von zwei ferromagnetischn Bandstreifen bestehende Magneteinrichtung vorgesehen ist. Die Bauteile werden in einer Gießform in einer genauen Lage fixiert und dann vollständig in die Kunststoffmasse eingebettet, wobei die Kunststoffspule die Durchflußpassage bildet. Mit einer solchen vollständigen Einbettung der Magneteinrichtung in eine Kunststoffmasse befaßt sich auch die US-A 4774844, in der zur Vermeidung von Rissebildungen in der Kunststoffmasse eine vorherige Beschichtung der Magneteinrichtung vorgeschlagen wird. Diese Ausführungen haben den Nachteil, daß der Meßwertaufnehmer im Falle eines Defektes der Magneteinrichtung nicht reparabel ist und ersetzt werden muß. Außerdem können solche aus einer Vergußmasse bestehenden Meßwertaufnehmer nicht aus dem für viele Anwendungsbereiche besonders geeigneten keramischen Werkstoff hergestellt werden. Schließlich widersteht die den Druckkörper bildende Vergußmasse auch nur begrenzt hohen Drücken und Temperaturen des Mediums.

Die Erfindung befaßt sich mit der zuerst genannten Herstellungsweise, bei der die Magneteinrichtung an einem vorgefertigten Meßrohr austauschbar montiert wird und bezweckt eine platzsparende und den Wirkungsgrad verbessernde Anordnung der Magneteinrichtung am Meßrohr.

Die Lösung ergibt sich aus den Merkmalen des Anspruchs 1. In vorteilhafter Weise befinden sich die Teile innerhalb der zylinderischen Außenfläche des Meßrohres, jedoch von außen zugänglich. Außerdem wird durch diese Anordnung eine wesentlich verbesserte Stabilität des Magnetkreises und damit eine höhere Meßgenauigkeit erzielt. Für die magnetischen Bauteile ist kein zusätzlicher Platzbedarf erforderlich, und die Meßgeräte können daher wesentlich kompakter ausgeführt werden. Wegen der Zugänglichkeit der Magneteinrichtung können diese bedarfsweise ausgetauscht werden. Durch die Unterteilung der Magneteinrichtung ist ein das Meßrohr umfassender Ein- und Ausbau möglich.

Die Anordnung des Jochs und der Magnetspule innerhalb des Meßrohres läßt sich den speziellen Bauausführungen und Herstellungsmethoden gut anpassen. Bei einer einfachen Ausführung ist das die Magnetspule tragende Mitteilteil des Jochs in einer die Sackbohrung verbindenden halbkreisförmigen Nut angeordnet, so daß das Joch und die Magnetspule von außen in die Nut eingelegt werden können. Bei einer anderen Ausführung sind im Meßrohr ein oder mehrere parallel zu den Sackbohrungen verlaufende durchgehende Bohrungen vorgesehen, welche durch an der Außenfläche des Meßrohres angeordnete nutenförmige Ausnehmungen verbunden sind und das die Magnetpole verbindende Joch aufnehmen.

Die Magnetspulen können entsprechend den baulichen Gegebenheiten und Betriebserfordernissen ausgebildet werden. Beispielsweise können die beiden Magnetpole durch zwei parallel angeordnete Jochbögen verbunden sein. Um einen stärkeren Magnetfluß zu schaffen, kann das Joch aufeinanderfolgend durch mehrere Bohrungen geführt und mit mehreren Spulenwicklungen versehen sein.

In der Zeichnung sind mehrere Ausführungsbeispiele dargestellt; es zeigt
- Fig. 1: ein Meßrohr in einer Seitenansicht,
- Fig. 2: den Gegenstand der Fig. 1 in einem mittleren Querschnitt mit Magnetpolen und einem Joch,
- Fig. 3: den Gegenstand der Fig. 1 in einer Draufsicht,
- Fig. 4: ein zweites Ausführungsbeispiel eines Meßrohres,
- Fig. 5: den Gegenstand der Fig. 4 in einem mittleren Querschnitt mit Magnetpolen und einem Joch,
- Fig. 6: ein drittes Ausführungsbeispiel in einem mittleren Querschnitt mit Magnetpolen und einem Joch und
- Fig. 7: ein Joch mit drei Magnetspulen in einer perspektivischen Darstellung.

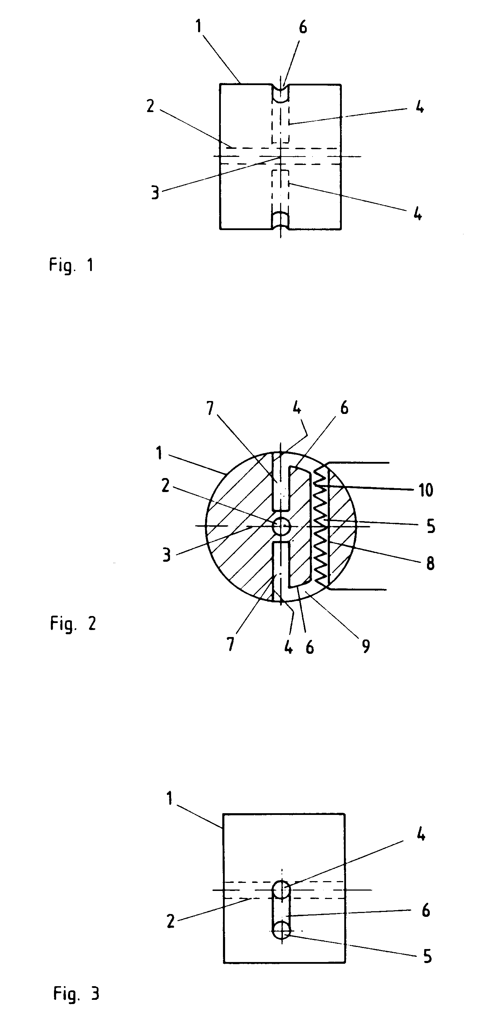

Das in den Fig. 1 bis 3 dargestellte Meßrohr 1 für ein magnetisch-induktives Durchflußmeßgerät besteht aus einem elektrisch isolierenden Werkstoff wie Kunststoff, Keramik o. dgl. Es hat eine Zylinderform und ist mit einer axialen Durchflußbohrung 2 versehen. Das Meßrohr 1 ist besonders dickwandig, d. h. der Außendurchmesser beträgt ein Mehrfaches des Durchmessers der Durchflußbohrung 2. Zwei Meßelektroden 3 sind rechtwinklig zur Durchflußbohrung 2 und einander diametral gegenüberliegend, gas- bzw. flüssigkeitsdicht im Meßrohr 1 angeordnet, wobei die Elektrodenköpfe bis zur Durchflußbohrung 2 ragen, um mit der zu messenden Flüssigkeit in Berührung zu kommen.

Im Meßrohr 1 sind, ebenfalls diametral gegenüberliegend und gegenüber den Meßelektroden 3 um 90^{o} versetzt, zwei Sackbohrungen 4 vorgesehen, die der Aufnahme von zwei Magnetpolen 7 aus einem ferromagnetischen Werkstoff dienen. Weiterhin ist zur Aufnahme eines die Magnetpole 7 verbindenden Jochs 8 innerhalb des Meßrohres 1 eine durchgehende Bohrung 5 vorgesehen, die seitlich neben der Durchflußbohrung 2 parallel zu den Sackbohrungen 4 verläuft. Die äußeren Enden der durchgehenden Bohrung 5 sind mit der jeweils benachbart liegenden Sackbohrung 4 durch eine Nut 6 verbunden, in denen das Zwischenteil 9 des Jochs 8 liegt, das an den betreffenden Magnetpol 7 anschließt. Das Joch 8 und die anschließenden Zwischenteile 9 bestehen ebenfalls aus einem ferromagnetischen Werkstoff. Um das aus den beiden Magnetpolen 7, den Zwischenteilen 9 und dem mit einer Magnetspule 10 versehenen Joch 8 bestehende Magnetbauteil in die Sackbohrung 4 und die aus der durchgehenden Bohrung 5 und den Nuten 6 bestehende Ausnehmung einbauen zu können, ist es in zwei oder mehrere Abschnitte unterteilt, welche in diese Ausnehmung einsteckbar und zusammensteckbar sind, wobei sie jedoch gegeneinanderliegen müssen, um den magnetischen Rückfluß sicherzustellen. Im eingebauten Zustand liegen alle magnetischen Bauteile innerhalb der Mantelfläche des Meßrohres 1.

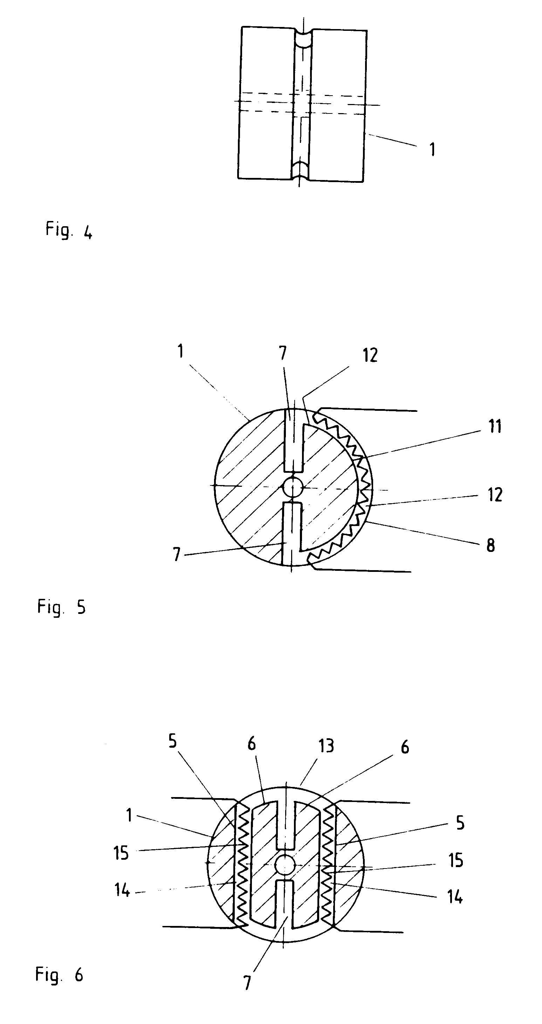

Bei dem Ausführungsbeispiel nach den Fig. 4 und 5 ist zur Aufnahme des Mittelteils 12 vom Joch 8 eine Nut 11 vorgesehen, welche auf der Mantelfläche halbkreisförmig verläuft und an die Sackbohrungen 4 anschließt. Auch bei dieser Ausführung ist ein das Einstecken und Zusammenstecken der Magnetbauteile ermöglichender geteilter Aufbau vorhanden.

In Fig. 6 ist eine Ausführung mit zwei diametral gegenüberliegenden durchgehenden Bohrungen 5 und Nuten 6 versehenes Meßrohr 1 gezeigt, wobei die Magnetpole 7 durch zwei parallel angeordnete Jochbögen 14 verbunden sind, von denen jeder mit einer Magnetspule 15 versehen ist, die parallel in gleicher Richtung vom Strom durchflossen werden. Bei dieser Ausführung wird der magnetische Fluß vergrößert.

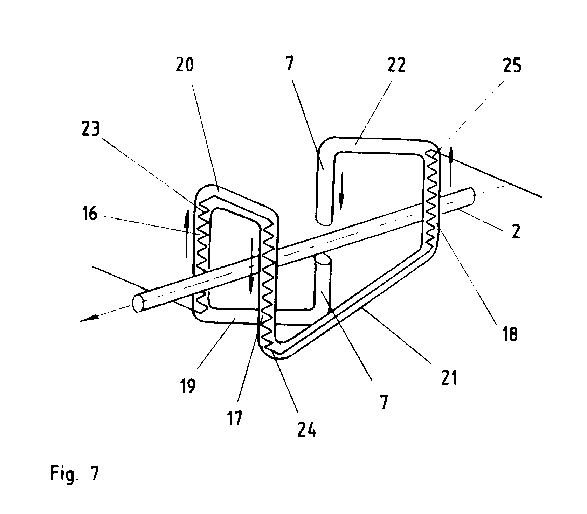

Für eine weitere Verstärkung des Magnetflusses kann, wie in Fig. 7 beispielsweise dargestellt ist, das die Magnetpole 7 verbindende Joch aufeinanderfolgend durch mehrere Bohrungen geführt und mit mehreren Magnetspulen 23 bis 25 versehen sein. Dargestellt sind nur die Magnetbauteile und schematisch die Durchflußbohrung 2. Das Ausführungsbeispiel besitzt drei Schenkel 16 bis 18, für die im Meßrohr entsprechend angeordnete durchgehende Bohrungen vorhanden sind (nicht dargestellt). Außerdem ist das Meßrohr zur Aufnahme der Zwischenteile 19 bis 22 mit Nuten versehen, die zur Verbindung der Sackbohrungen 4 für die Magnetpole 7 mit den durchgehenden Bohrungen in die Mantelfläche eingearbeitet sind (ebenfalls nicht dargestellt).

## Patentansprüche

1. Meßwertaufnehmer für ein magnetisch-induktives Durchflußmeßgerät bestehend aus
(a) einem vorgefertigten dickwandigen Meßrohr (1) aus einem elektrisch isolierenden Werkstoff
- mit zwei Meßelektroden (3), die einander diametralgegenüberliegend und rechtwinklig zur Durchflußbohrung (2) gas- bzw. flüssigkeitsdicht angeordnet sind,
- mit zwei Sackbohrungen (4), die einander diametral gegenüberliegend um 90^{o} zu den Meßelektroden (3) versetzt und rechtwinklig zur Durchflußbohrung (2) verlaufen,
- mit einer oder mehreren Ausnehmungen (6,11,) in seiner zylindrischen Außenfläche, welche selbst oder mit Hilfe von einer oder mehreren in der Meßrohrwand angeordneten Bohrung(en) (5) die Sackbohrungen (4) verbinden,
(b) einer Magneteinrichtung
- mit zwei in die Sackbohrungen (4) einsteckbaren Magnetpolen (7),
- mit einem die Magnetpole (7) verbindenden, in die Ausnehmung(en) (6,11,) bzw. Ausnehmung(en) und Bohrung(en) einführbaren Joch (8,13,14), dem wenigstens eine Magnetspule (10) zugeordnet ist,
- wobei die Magneteinrichtung für einen Einbau in die Sackbohrungen (4) und Ausnehmung(en) (6,11,5) bzw. Ausnehmung(en) und Bohrung(en) unterteilt und zusammensteckbar ausgebildet ist.

2. Meßwertaufnehmer nach Anspruch 1, dadurch gekennzeichnet, daß das mit einer Magnetspule (10) versehene Joch (8) in einer die Sackbohrungen (4) verbindenen halbkreisförmigen, nutenförmigen Ausnehmung (11) angeordnet ist.

3. Meßwertaufnehmer nach Anspruch 1, dadurch gekennzeichnet, daß im Meßrohr (1) ein oder mehrere parallel zu den Sackbohrungen (4) verlaufende, durchgehende Bohrungen (5) vorgesehen sind, welche durch an der Außenfläche des Meßrohres (1) angeordnete nutenförmige Ausnehmungen (6, 11) verbunden sind und das die Magnetpole (7) verbindende Joch (8,13,14,20 bis 22) aufnehmen.

4. Meßwertaufnehmer nach einer der Ansprüche 1 bis 3, dadurch gekennzeichnet, daß die beiden Magnetpole (7) durch zwei parallel angeordnete Jochbögen (14) verbunden sind.

5. Meßwertaufnehmer nach Anspruch 1, dadurch gekennzeichnet, daß das Joch (20 bis 22) aufeinanderfolgend durch mehrere Bohrungen und nutenförmige Ausnehmungen geführt und mit mehreren Spulenwicklungen (23 bis 25) versehen ist.

## Claims

1. A transducer for a magnetic-inductive flowmeter, comprising
a) a previously-manufactured thick-walled measuring tube (1) made of an electrically insulating material with two measuring electrodes (3) disposed diametrically opposite one another and at right angles to a through bore (2) so as to be gas-tight and fluid tight,
with two blind bores (4) extending diametrically opposite one another at 90° to the measuring electrodes (3) and at right angles to the flow bore (2), and
with one or more recesses (6, 11) in the cylindrical outer surface, the recesses joining the blind bores (4) either by themselves or via one or more bores (5) formed in the measuring-tube wall, and
(b) a magnetic arrangement
with two magnetic poles (7) insertable into the blind bores (4), and
with a yoke (8, 13, 14) which connects the magnetic poles (7) and is insertable into the recess or recesses (6, 11) and the bore or bores and is associated with at least one field coil (10),
the magnetic arrangement being divided and adapted to be fitted together for assembly in the blind bores (4) and the recess or recesses (6, 11, 5) and the bore or bores.

2. A transducer according to claim 1, characterised in that the yoke (8), which is provided with a field coil (10), is disposed in a semicircular groove or recess (11) joining the blind bores (4).

3. A transducer according to claim 1, characterised in that one or more through bores (5) extending parallel to the blind bores (4) are formed in the measuring tube (1) and are connected by grooves or recesses (6, 11) situated at the outer surface of the measuring tube (1) and receive the yoke (8, 13, 14, 20 - 22) connecting the magnetic poles (7).

4. A transducer according to any of claims 1 to 3, characterised in that the two magnetic poles (7) are connected by two parallel yokes (14).

5. A transducer according to claim 1, characterised in that the yoke (20 - 22) passes successively through a number of bores and grooves or recesses and has a number of wire-wound coils (23 - 25).

## Revendications

1. Capteur de valeurs de mesure pour un débitmètre magnéto-inductif, constitué par
(a) un tube de mesure préfabriqué à paroi épaisse (1) réalisé en un matériau électriquement isolant et
- comportant deux électrodes de mesure (3), qui sont situées dans des positions diamétralement opposées et perpendiculairement au perçage de traversée (2), d'une manière étanche aux gaz et aux liquides,
- deux trous borgnes (4), qui sont diamétralement opposés, en étant décalés de 90° par rapport aux électrodes de mesure (3), et s'étendent perpendiculairement au perçage de traversée (2),
- un ou plusieurs évidements (6,11) ménagés dans la surface cylindrique extérieure du capteur et qui relient eux-mêmes ou au moyen d'un ou de plusieurs perçages (5) ménagés dans la paroi du tube de mesure, les trous borgnes (4),
(b) un dispositif magnétique comportant
- deux pôles magnétiques (7) pouvant être enfichés dans les trous borgnes (4),
- une culasse (8,13,14), qui relie les pôles magnétiques (7), reliant les pôles magnétiques (7) et pouvant être introduite dans les évidements (6,11) ou dans des évidements et perçages et à laquelle est associée au moins une bobine magnétique (10),
- le dispositif magnétique étant subdivisé et pouvant être assemblé par enfichage, pour un montage dans les trous borgnes (4) et le ou les évidements (6,11,5) ou le ou les évidements et le ou les perçages.

2. Capteur de valeurs de mesure suivant la revendication 1, caractérisé par le fait que la culasse (8), pourvue d'une bobine magnétique (10), est disposée dans un évidement en forme de rainure semi-circulaire (11) reliant les trous borgnes (4).

3. Capteur de valeurs de mesure suivant la revendication 1, caractérisé par le fait que dans le tube de mesure (1) il est prévu un ou plusieurs perçages traversants (5), qui sont parallèles aux trous borgnes (4), qui sont raccordés par des évidements en forme de rainures (6,11) situés dans la surface extérieure du tube de mesure (1) et qui logent la culasse (8,13,14,20 à 22) qui relie les pôles magnétiques (7).

4. Capteur de valeurs de mesure suivant l'une des revendications 1 à 3, caractérisé par le fait que les deux pôles magnétiques (7) sont réunis par deux branches de culasse parallèles (14).

5. Capteur de valeurs de mesure suivant la revendication 1, caractérisé par le fait que la culasse (20 à 22) est guidée successivement par plusieurs perçages et plusieurs évidements en forme de rainures et est pourvue de plusieurs enroulements de bobine (23 à 25).
